# FASCICULE DE BREVET EUROPEEN

(11) **EP 3 711 104 B1**
(45) Date de publication et mention de la délivrance du brevet: **13.03.2024**
(21) Numéro de dépôt: 18827153.0
(22) Date de dépôt: 09.11.2018
(51) Int. Cl.: H01M 50/507, H01M 50/514

(54) **BLOC ENERGETIQUE CONSTITUE PAR UN ASSEMBLAGE SANS SOUDURE D'UNE PLURALITE DE CELLULES DE BATTERIES**
LEISTUNGSEINHEIT BESTEHEND AUS EINER LÖTFREIEN ANORDNUNG AUS EINER VIELZAHL VON BATTERIEZELLEN
POWER UNIT MADE UP OF A SOLDER-FREE ASSEMBLY OF A PLURALITY OF BATTERY CELLS

(30) Priorité: 15.11.2017 FR 1760750
(43) Date de publication de la demande: 23.09.2020
(73) Titulaire: Pymco Technologies, 94200 Ivry-sur-Seine (FR)
(72) Inventeur: GILTON, Pierre-Yves, 75012 Paris (FR); NGUYEN, Marc, 75010 Paris (FR)
(74) Mandataire: IP Trust
(86) Numéro de dépôt international: PCT/FR2018/052795
(87) Numéro de publication internationale: WO 2019/097146

(56) Documents cités:
- EP-A2- 2 697 846
- US-A1- 2015 364 744
- US-A1- 2017 229 208

## Description

### Domaine de l'invention

La présente invention concerne le domaine des blocs énergétiques constitués par un assemblage d'une pluralité de cellules de batteries reliées entre elles sans soudure.

Les cellules présentent à l'une des extrémités frontales une protubérance cylindrique à fond plat conducteur de section inférieure à la section de la cellule, correspondant généralement au pôle positif, et à l'extrémité opposée un fond plat conducteur bordé par la gaine de protection, dont la section est très légèrement inférieure à la section extérieure de la cellule et nettement supérieure à la protubérance cylindrique susvisée.

Cette zone constitue généralement le pôle négatif. Ce type de cellule est connu sous le nom ancestral de « pile Leclanché ».

Les cellules sont typiquement des piles rechargeables dont les dimensions sont généralement normalisées, par exemples des cellules RC6, selon la codification CEI (Commission électrotechnique internationale), présentant une longueur de 50 millimètres, et un diamètre de 14,2 millimètres ou des cellules 18650 dont la longueur est de 65 millimètres et le diamètre de 18 millimètres. Bien entendu, l'invention n'est pas limitée à un type particulier de cellules.

L'état de l'art actuel des batteries place les cellules cylindriques comme le meilleur compromis entre performances énergétiques et puissance. Leur production de masse leur confère également un coût spécifique le plus bas des formats de batteries actuels.

Cependant, leur faible contenu énergétique unitaire exige des assemblages coûteux et en nombre important.

En outre, ces assemblages sont souvent la source de limitations de performances de par leur contact électrique et thermique non-idéal.

Un assemblage simple, facile de mise en oeuvre, peu coûteux ainsi que performant électriquement et thermiquement représente donc une pièce essentielle de la chaîne de traction électrique.

Les batteries actuelles sont constituées d'un grand nombre de cellules (parfois de l'ordre de la centaine voire plusieurs milliers), reliés électriquement entre elles par des contacts formés par des lamelles conductrices soudées aux bornes desdits éléments, lesquels sont séparés par isolants et assemblés sous forme de pack par un ruban adhésif. La réalisation de telles batteries nécessite un montage fastidieux, long et onéreux.

En outre, elles ne permettent pas le remplacement d'un ou plusieurs éléments qui pourraient s'avérer défectueux, par les services après-vente ou de maintenance.

Plus récemment, on a proposé des solutions consistant à relier les cellules de batteries mécaniquement et électriquement par deux éléments plans ou platines venant en contact électrique et mécanique respectivement avec l'une et l'autre des extrémités des cellules.

Ces platines présentent des pistes conductrices, généralement du cuivre, et sont ensuite reliées par des éléments de liaison mécaniques tels que des entretoises assurant un serrage pour maintenir le bloc ainsi constitué.

### Etat de la technique

On connaît dans l'état de la technique le brevet européen EP 2034539 décrivant une solution de bloc énergétique constitué d'une pluralité de cellules cylindriques ou prismatiques juxtaposées, reliées entre elles sans soudure et logées dans les alvéoles traversantes d'un casier séparateur et positionneur, caractérisée en ce que ce casier séparateur et positionneur est disposé entre deux panneaux de contact et de maintien comportant une ossature et dont les faces internes sont munies d'une ou plusieurs bande(s) de contact fixée(s), sans soudure, contre lesdites faces et assurant chacune l'interconnexion électrique d'une pluralité de cellules c'est-à-dire d'un nombre de cellules supérieur à deux, cette bande de contact ou chacune des bandes de contact étant réalisée dans un matériau conducteur flexible et comportant une pluralité de languettes de contact flexibles découpées dans ladite ou dans chacune desdites bande(s) de contact et rattachées à celle(s)-ci, ces languettes de contact étant maintenues plaquées contre les bornes des cellules, par des moyens élastiques de pression individuels répartis sur la face interne des panneaux de contact et de maintien, lesdits panneaux étant fixés par vissage sur les grandes faces opposées du casier séparateur et positionneur, de sorte que lesdites languettes de contact équipant la face interne desdits panneaux se trouvent pressées individuellement contre l'une des bornes ou pôles positif ou négatif constituant les extrémités opposées desdites cellules.

Le brevet américain US5096788 décrit un autre exemple de bloc de batteries sans soudure comprenant :
∘ un logement ayant un couvercle ;
∘ une pluralité de cellules positionnées dans une paire de plaques d'alignement supérieure et inférieure et logées dans ledit logement, chaque cellule ayant une borne positive et une borne négative ;
∘ un circuit souple constitué par une unique feuille conductrice procurant l'interconnexion entre la pluralité de cellules ;
∘ un premier élément de pression disposé entre la surface interne du fond du logement et une portion de ladite feuille conductrice souple ; - et un deuxième élément de pression placé entre le couvercle et une autre portion de la feuille conductrice souple, chacun desdits premier et deuxième éléments de pression étant muni de doigts élastiques, lesdits doigts élastiques étant inclinés en direction des bornes positives et négatives, de sorte à plaquer lesdites portions opposées de la feuille conductrice contre lesdites bornes et à réaliser l'interconnexion de ladite pluralité de cellules.

Cette solution n'est pas satisfaisante pour un bloc de haute énergie car les batteries constituées d'un grand nombre de cellules (par exemple de l'ordre de cent cellules) assemblées suivant un montage en parallèle, génèrent de très hauts courants électriques à transporter par les circuits d'interconnexion (jusqu'à 100 ampères voire plusieurs centaines d'ampères), ce qui n'est pas réalisable avec des circuits souples décrits. Par ailleurs, la matière dans laquelle sont réalisées les circuits souples (film polyamide ou polyester) est très fragile et peut être détériorée par le frottement des ressorts d'appui en cas de légers mouvements, ce qui entraînerait une perte de contact électrique. Enfin, les ressorts décrits dans ce document n'ont pas une course et une force d'appui suffisantes pour assurer un contact efficace de la bande de contact souple sur les bornes des cellules.
∘ le coût du circuit souple est directement lié à la surface de celui-ci ; on conçoit qu'il serait très élevé si la technologie proposée dans ce document était appliquée à la réalisation de batteries constituées d'un grand nombre de cellules à connecter (très grande surface à couvrir) ;
∘ selon ce document, la batterie n'est plus démontable après la fermeture du couvercle par un procédé de scellement.

Dans une application à la fabrication de batteries constituées d'un grand nombre de cellules, le brevet européen EP1450422 propose de loger ces cellules dans un casier ouvert sur ses deux faces et de les relier, deux à deux, au moyen de petites plaques de connexion soudées sur les extrémités opposées desdites cellules.

Ce mode de connexion a pour inconvénient de nécessiter des éléments ou cellules adaptés à la soudure et un outillage spécialisé onéreux, encombrant et de manipulation délicate, pour réaliser les multiples soudures. Un autre inconvénient majeur de ce mode de connexion est de rendre la batterie indémontable, par exemple pour procéder au remplacement d'un ou plusieurs éléments défectueux.

De plus, les petites plaques de connexion utilisées dans le dispositif décrit par ce document ne sont pas pressées contre les pôles des éléments de la batterie par des moyens de pression individuels mais par un moyen collectif de pression constitué par des plaques de matière élastique, tel que des plaques de caoutchouc intercalées entre les bornes des cellules connectées et des plaques de couvertures supérieure et inférieure. De telles plaques élastiques ne permettent pas de garantir la continuité du contact électrique entre les petites plaquettes de connexion et les éléments ou cellules, notamment en cas de rupture des soudures.

Au niveau du pontage de la partie électrode de connexion d'un des deux accumulateurs contigus et du fond du boîtier d'accumulateur de l'autre accumulateur, une plaque de connexion plate est connectée par soudage à proximité de l'un et de l'autre de façon à constituer une structure de connexion d'accumulateur à faible coût qui permet de réduire la résistance électrique par un processus facile. Chaque partie de stockage d'accumulateur bien carrée dans la vue en plan d'un boîtier support constitué de résine synthétique renferme des accumulateurs cylindriques dont les axes sont parallèles, et les deux côtés du boîtier support sont fermés avec des couvercles pourvus de trous rayonnants de façon à constituer un module d'accumulateurs solide et résistant aux oscillations et aux chocs. Une pluralité de modules d'accumulateurs sont combinés et fixés avec des plaques de blindage en un corps intégral de manière à constituer un bloc d'accumulateurs.

Le brevet européen EP2008354 décrit une autre solution de bloc de batteries comprenant :
- une pluralité de conducteurs chaque conducteur comprenant une pluralité de trous ;
- une pluralité de batteries dans lequel chacune des batteries comprend deux bornes;
- une pluralité de liaisons fusibles.

Pour chacune des batteries, une des liaisons fusibles couple l'un des conducteurs à l'une des bornes de la batterie, dans lequel la liaison fusible s'étend à travers l'un de la pluralité de trous du conducteur.

On connaît également le brevet européen EP2416405 décrivant un autre exemple connu de bloc-batterie, ou un module de bloc-batterie, montrant des performances, une fiabilité et une sécurité améliorées en cas d'impact sur une seule petite région du bloc-batterie, ce qui a un effet mineur sur son coût, sa complexité, son poids et sa taille. Le module est conçu de manière qu'une interconnexion fusible spécifique associée à une batterie unique ou des interconnexions fusibles associées à une batterie unique, soit/soient la (les) dernière(s) à fondre en cas de court-circuit. L'utilisation d'interconnexions à effacement rapide permet de minimiser le risque de formation d'arc soutenu pour l'(les) interconnexion(s) prédéterminée(s). L'invention permet, ainsi, de minimiser le risque d'endommagement et de surchauffe.

La demande de brevet américain US2015/364744 décrit un autre exemple de collecteur connecté à un terminal d'une cellule comprenant:
- une partie substrat faite d'un matériau de plaque conducteur;
- une portion de connexion définie par la première fente formée dans le matériau de la plaque conductrice, et connectée au terminal de la cellule;
- Un fusible étroit défini par les deuxième fentes qui se forment dans le matériau de la plaque conductrice de manière à s'étendre à partir de la première fente, et dont une extrémité est connectée à la partie du substrat et l'autre extrémité est connectée à la partie de connexion;
- et un film isolant lié à une région comprenant du fusible et des secondes fentes définissant le fusible à travers la partie du substrat et la partie de connexion.Le brevet américain US2017/229208 décrit une barre de barage configurée pour faciliter la connexion électrique de plusieurs cellules de batterie d'une manière qui prend en charge les fonctions telles que le montage, la fusion au niveau des cellules, la fusion au niveau de la couche et les canaux de refroidissement.

On connaît également la demande de brevet européen EP2697846 décrivant un autre exemple d'une unité d'accumulation pour accumuler de l'énergie électrique, comportant au moins un accumulateur d'énergie présentant au moins une borne positive et au moins une borne négative. L'accumulateur d'énergie est conçu pour être chargé en énergie électrique au moyen de la borne positive et de la borne négative et pour fournir l'énergie électrique au moyen des bornes. L'unité d'accumulation présente un rail de contact électro-conducteur connecté à la borne positive et un rail de contact électro-conducteur connecté à la borne négative. Les rails de contact présentent respectivement au moins une borne externe pour la connexion électrique de l'unité d'accumulation.

### Inconvénients de l'art antérieur

Les solutions de l'art antérieur ne sont pas totalement satisfaisantes car la liaison électrique entre le pôle négatif se fait par un appui sur une surface conductrice non plane, ce qui peut occasionner des mauvais contacts, notamment lorsque la surface n'est pas dégraissée ou présente des dépôts de salissures présentant une mauvaise conductibilité, lorsque les contacts des batteries ne sont pas parfaitement conjugués avec les surfaces conductrices planes du module.

Parfois, comme dans le brevet EP 2034539, cette liaison électrique avec le pôle négatif se fait par des lames déformables élastiquement, afin de permettre un effet ressort et un débattement par rapport à une zone formant une charnière linéaire.

Cette solution n'est pas non plus satisfaisante car le contact n'est parfait que lorsque la surface de la lame est strictement adjacente à la surface du pôle négatif, ce qui ne se produit qu'occasionnellement avec une lame articulée élastique.

On connaît aussi dans la demande de brevet US2015/364744 une solution comprenant une partie substrat faite d'un matériau en feuille , une partie raccord ayant une périphérie définie par une première fente, formée sur le matériau en feuille conducteur et reliée à la borne de batterie et un fusible étroit ayant une périphérie définie par des secondes fentes formées sur le matériau en feuille conducteur, en continu, jusqu'à la première fente et ayant une extrémité raccordée en continu à la partie substrat et l'autre extrémité raccordée en continu à la partie raccord. Un film isolant est fixé à une région comprenant le fusible et les secondes fentes définissant le fusible et sur la partie substrat et la partie raccord.

La demande de brevet américaine US2017229208 décrit un autre exemple de busbar pour la connexion de cellules de batteries.

La demande de brevet européenne EP2697846 décrit une unité d'accumulation pour accumuler de l'énergie électrique, comportant au moins un accumulateur d'énergie présentant au moins une borne positive et au moins une borne négative. L'accumulateur d'énergie est conçu pour être chargé en énergie électrique au moyen de la borne positive et de la borne négative et pour fournir l'énergie électrique au moyen des bornes. L'unité d'accumulation présente un rail de contact électroconducteur connecté à la borne positive et un rail de contact électroconducteur connecté à la borne négative. Les rails de contact présentent respectivement au moins une borne externe pour la connexion électrique de l'unité d'accumulation.

### Solution apportée par l'invention

Afin de remédier à ces inconvénients, l'invention concerne un bloc énergétique constitué par un assemblage sans soudure d'une pluralité de cellules de batteries présentant sur leurs deux extrémités frontales opposées des surfaces de contact respectivement positive et négative, lesdites cellules étant juxtaposées et parallèles mécaniquement entre elles, ledit bloc comportant :
- une platine inférieure présentant des zones de contacts métalliques aptes à assurer la liaison électrique avec le fond métallique inférieur d'une cellule de batterie
- une platine supérieure présentant des zones de contacts métalliques pour assurer la liaison électrique et optionnellement thermique avec la capsule supérieure d'une cellule
- des moyens de connexion avec lesdites capsules supérieures des cellules, déformables élastiquement, selon une direction axiale par rapport à l'orientation desdites cellules,
ledit bloc comporte une feuille conductrice présentant des découpes définissant des contacts déformables élastiquement présentant une partie centrale plane pour assurer le contact avec la capsule supérieure d'une cellule correspondante, ladite partie centrale plane étant mobile par rapport au plan de ladite platine intermédiaire selon un déplacement parallèle audit plan, ladite partie centrale plane étant repoussée en direction de la cellule par un matériau déformable élastiquement selon une direction perpendiculaire audit plan, ledit matériau étant logé entre la surface inférieure de ladite platine supérieure et ladite partie centrale plane du contact, ladite partie centrale plane étant reliée à une partie fixe de ladite feuille conductrice par un bras de liaison au moins.

Les platines peuvent être constituées avantageusement, mais pas exclusivement, par des circuits imprimés.

Cette solution permet l'utilisation de circuits imprimés comme platine et permet également une intégration directe de composants de contrôle batteries tels que BMS (battery management system), un circuit électronique commandant des fonctions du module ou encore des contacteurs statiques utilisant des transistors.

Les assemblages peuvent être utilisés en série comme en parallèle ou en série-parallèle et font donc preuve d'une modularité totale.

Elle permet également d'intégrer des éléments fusibles pour chaque cellule.

D'un point de vue thermique, la présence de platines conductrices en contact fort avec les cellules permet une gestion optimale de la thermique tant en refroidissement qu'en chauffe, permettant ainsi des performances améliorées ainsi qu'un allongement de la durée de vie des cellules.

De plus, cette gestion thermique peut être très simplement mise en oeuvre par la mise en contact de la ou des platines avec un dissipateur / refroidisseur / plaque froide ou tout autre élément permettant l'évacuation des calories / le refroidissement.

L'effet technique est une meilleure liaison électrique en raison du déplacement de la surface de contact dans un plan perpendiculaire à l'axe, ce qui permet de maintenir un parallélisme entre la surface formant le pôle positif, par exemple, et l'élément de liaison du bloc. Par ailleurs, cette configuration en forme spirale accompagnée ou non d'un élément élastique permet d'assurer une force d'appui mécanique supérieure à celle obtenue avec une lame déformable par rapport à une zone charnière linéaire.

Selon une solution préférée, ledit bloc comporte en outre une platine intercalaire accolée contre la surface inférieure de ladite platine supérieure,
ladite platine intercalaire comportant une feuille conductrice présentant des découpes définissant des contacts déformables élastiquement présentant une partie centrale plane pour assurer le contact avec la capsule supérieure d'une cellule correspondante, ladite partie centrale plane étant mobile par rapport au plan de ladite platine intermédiaire selon un déplacement parallèle audit plan, ladite partie centrale plane étant repoussée en direction de la cellule par un matériau déformable élastiquement selon une direction perpendiculaire audit plan, ledit matériau étant logé entre la surface inférieure de ladite platine supérieure et ladite partie centrale plane du contact, ladite partie centrale plane étant reliée à une partie fixe de ladite feuille conductrice par un bras de liaison au moins.

De préférence, ledit bras présente une forme spirale.

Selon une alternative, la partie centrale plane dudit contact est reliée à la partie fixe par une pluralité de bras tangentiels.

Avantageusement, ladite platine intermédiaire est constituée par un circuit imprimé comportant une, deux, quatre ou plusieurs couches métalliques séparées par un isolant.

De préférence, lesdites parties centrales présentent une pluralité de trous métallisés reliant électriquement lesdites couches métalliques au niveau de chaque contact.

Selon un mode de réalisation avantageux, une partie des pistes d'au moins un desdits circuits imprimés, ou chaque contact, présente une zone fusible entre les couches métalliques de ladite partie centrale et les couches métalliques de la zone de liaison avec les couches métalliques de la feuille.

Selon une variante, ladite platine inférieure est constituée par une tôle métallique.

De préférence, ladite platine inférieure est constituée par un circuit imprimé comportant une, deux, quatre ou un nombre plus élevé de couches métalliques séparées par un isolant.

Avantageusement, les zones de contact de la platine inférieure présentent une pluralité de trous métallisés reliant électriquement et thermiquement lesdites couches métalliques.

Selon une variante, ladite platine inférieure et ladite platine supérieure sont réunies mécaniquement et généralement électriquement par des entretoises métalliques.

Selon une autre variante, ladite platine supérieure est constituée par un circuit imprimé multicouche intégrant un circuit de management intelligent de la batterie.

La platine supérieure intègre les points d'entrée/sortie de connexion électriques positifs et négatifs du bloc énergétique. Ces points de connexion avantageusement répartis permettent de la connexion mécanique par vissage de « busbar » de forte section ou par soudure de conducteurs électriques de liaison.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente une vue éclatée d'un bloc énergétique selon l'invention
- la figure 2 représente une vue en détail, de dessous, de la platine intermédiaire
- la figure 3 représente une vue en détail, en coupe, de la platine intermédiaire.
- la figure 4 représente une autre vue éclatée d'un bloc énergétique selon l'invention.

### Présentation générale du bloc énergétique

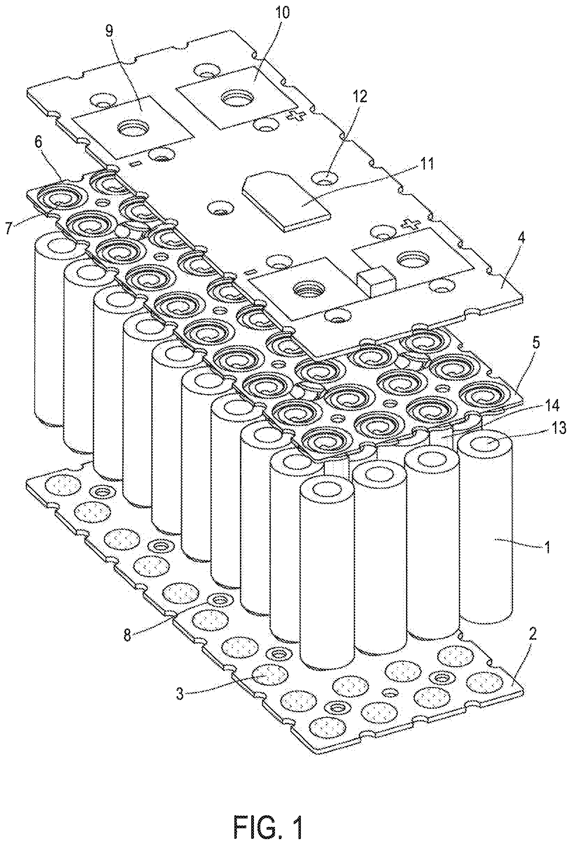

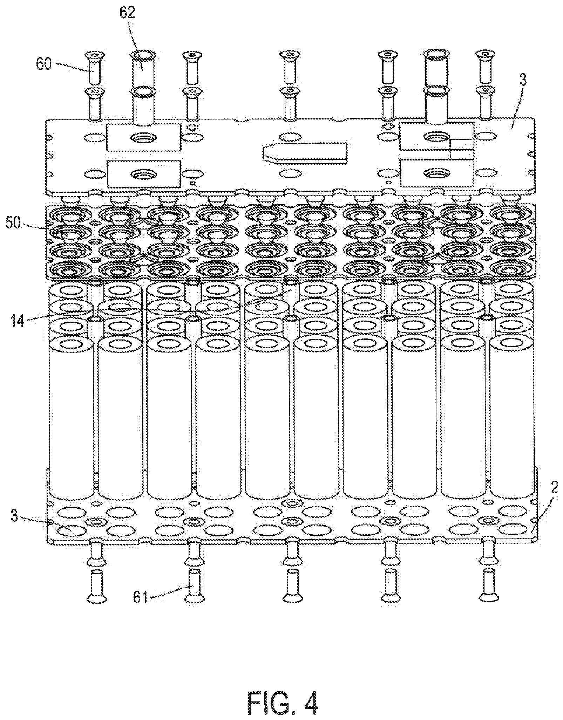

Le bloc énergétique illustré par la figure 1 et par la figure 4 comprend :
- un ensemble de batteries (1) parallèles entre elles et orientées toutes dans le même sens, avec la capsule métallique formant le pôle positif dirigé vers le haut et alignées pour former une matrice de N rangées et M colonnes ;
- un circuit imprimé inférieur (2) dont la surface conductrice supérieure (3) assure la liaison avec la capsule métallique inférieure constituant le pôle négatif des batteries ;
- un circuit imprimé supérieur (4), dont la surface inférieure assure par l'intermédiaire d'un élément intermédiaire (5) la liaison avec la capsule métallique supérieure constituant le pôle positif des batteries ;
- un élément intermédiaire (5) présentant des découpes (6) définissant des surfaces de contacts (7) assurant la liaison électrique et mécanique avec la capsule de la cellule (1) correspondante.

### Description détaillée du circuit imprimé inférieur (2)

Le circuit imprimé inférieur (1) remplit plusieurs fonctions :
A - il assure la tenue mécanique de l'ensemble, et présente une rigidité suffisante pour éviter les déformations
B - il assure l'interconnexion entre les pôles négatifs des cellules de batteries (1) pour réaliser un assemblage en série, en parallèle ou en série-parallèle
C - il assure la liaison électrique avec le circuit imprimé supérieur (4)
D - il assure l'évacuation de la chaleur produite par les cellules de batterie (1).

Le circuit imprimé inférieur est constitué de deux couches conductrices séparées par une couche isolante, et les surfaces extérieures des couches conductrices étant revêtue d'un vernis. Le nombre de couches et leurs épaisseurs sont définis en fonction de la puissance électrique à transmettre.

Les couches conductrices sont typiquement des couches de cuivre d'une épaisseur de 0,1 millimètre, et les couches isolantes des stratifiés d'une épaisseur de 0,28 millimètres. De tels circuits imprimés sont connus sous le nom commercial FR4.

La liaison entre les couches de cuivre est assurée par des vias traversants (*Plated Through Hole,* PTH en anglais) constitués de trous métallisés, selon une technique connue de l'homme du métier. Ces vias sont répartis uniformément sur la platine (2).

Chaque zone de contact (3) présente une pluralité de vias pour assurer également la conduction thermique entre la surface métallique supérieure venant en contact avec le fond de la cellule de batterie, et la surface métallique inférieure qui évacue la chaleur par convection ou conduction selon sa mise en oeuvre. Éventuellement, la surface intérieure de la platine (2) est accolée à un radiateur pour améliorer la maîtrise thermique du bloc énergétique.

Selon le type de montage, les couches conductrices sont continues ou forment des pistes d'interconnexion. Pour un montage des cellules de batterie en parallèle, les couches conductrices sont dépourvues de zones isolées.

La platine (2) présente par ailleurs des trous fraisés et métallisés (8) de plus grand diamètre que les vias, pour le passage d'une vis à tête conique assurant la liaison avec une entretoise (14) en aluminium reliant la platine inférieure (2) à la platine supérieure (4) pour former une cage rigide et pour transmettre le courant de la platine inférieure (2) à la platine supérieure (4) et éventuellement assurer une conduction thermique.

L'assemblage est réalisé par des vis (60, 61) engagées dans les filetages prévus aux extrémités des entretoises (14).

### Description détaillée du circuit imprimé supérieur (4)

Le circuit imprimé supérieur (4) présente une structure similaire à celle du circuit imprimé inférieur (2), avec une configuration des couches métalliques différente, pour former les pistes de collecte du courant correspondant aux pôles positifs et aux pôles négatifs et pour assurer la connexion à des bornes de sortie (9, 10). Les gravures des pistes conductrices assurent également l'interconnexion avec un circuit (11) de contrôle des batteries d'accumulateurs (Battery Management System ou BMS en anglais).

Comme pour le circuit imprimé inférieur (2), des vias (62) relient les différentes couches conductrices du circuit imprimé supérieur (4), et des trous fraisés métallisés (12) reçoivent les têtes de vis coniques assurant la fixation des entretoises (14).

### Description détaillée de la platine intermédiaire (5)

Les capsules (13) des cellules (1) ne viennent pas directement en contact avec la surface inférieure conductrice du circuit imprimé supérieur (4).

Une platine intermédiaire (3) est intercalée entre le circuit imprimé supérieur (4) et les batteries (1).

Cette platine est formée dans l'exemple décrit par un circuit imprimé double-couche, présentant une surface conductrice en cuivre supérieure et une surface conductrice en cuivre inférieure séparées par un isolant. Les surfaces extérieures sont revêtues d'un vernis qui est retiré au niveau des surfaces de contact.

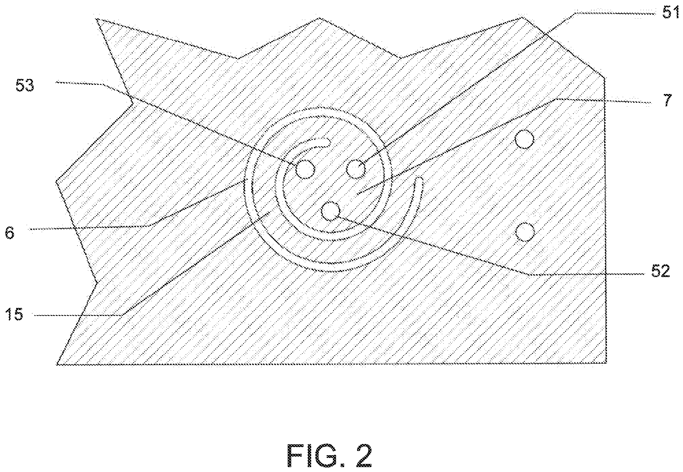

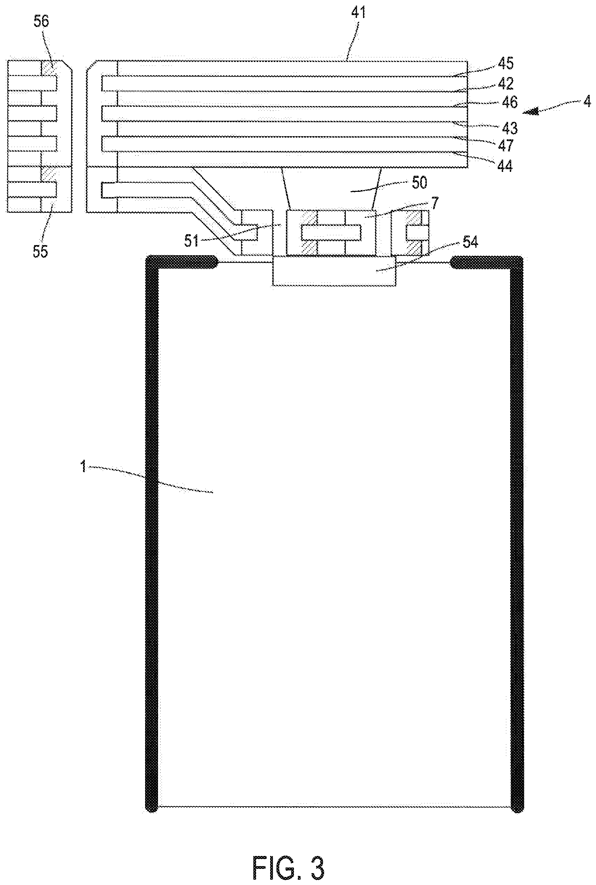

Les figures 2 et 3 représentent des vues respectivement de dessous et en coupe de l'une des zones de contact du circuit intermédiaire. La découpe (6) présente une forme de spirale et définit un bras recourbé (15) se terminant par une surface de contact (7) de forme sensiblement discale. Le bras s'étend sur au moins 180° et de préférence au moins 270° de façon à permettre un débattement de la surface de contact (7) dans une direction perpendiculaire au plan du circuit imprimé (5), en restant sensiblement parallèle à ce plan pendant toute la course.

Dans l'exemple décrit en référence à la figure 3, le circuit imprimé supérieur (4) présente quatre couches conductrices (41 à 44) et 3 couches d'isolant (45 à 47).

Les couches conductrices (41 à 44) sont régulièrement reliées par un via (47).

Le circuit imprimé intercalaire (5) présente des zones de contact (7) repoussées vers le bas par un matériau déformable élastiquement (50), par exemple une cupule en élastomère.

A titre d'exemple, la course est de l'ordre de 2 mm et l'effort de contact est de l'ordre de 70N.

Il présente deux pistes conductrices séparées par une couche isolante. Des vias (51 à 53) traversent la zone de contact pour permettre le passage de courants élevés entre la capsule (54) de la cellule de batterie (1) et le circuit imprimé intermédiaire (5).

La liaison électrique entre le circuit imprimé supérieur (4) et le circuit intermédiaire (5) est réalisée par des vias (55 à 56) traversant toutes les couches des deux circuits et en contact mutuel.

### Autres caractéristiques

Le bloc peut comporter des intercalaires formés par une feuille rigide présentant des lumières dont la section et la disposition correspondent au positionnement des batteries.

Ces intercalaires assurent le maintien et le calage des batteries grâce aux lumières dans lesquels sont logés, sans jeu notable, les éléments ou cellules cylindriques de la batterie.

Grâce à cette disposition, on obtient une circulation d'air de refroidissement le long et autour des cellules de batterie (1) tout en maintenant ces derniers positionnés sans jeu significatif. Ce résultat est important, en raison du fait que lors de la charge et de la décharge des éléments ou cellules de la batterie, particulièrement lors d'utilisation à forte puissance spécifique, il se produit une élévation de température dans lesdits accumulateurs, température qu'il est grandement souhaitable d'équilibrer entre les éléments ou cellules, à l'intérieur de la batterie, et de refroidir.

## Revendications

1. - Bloc énergétique constitué par un assemblage sans soudure d'une pluralité de cellules de batteries (1) présentant sur leurs deux extrémités frontales opposées des surfaces de contact respectivement positive et négative, lesdites cellules (1) étant juxtaposées et parallèles mécaniquement entre elles, ledit bloc comportant :
- une platine inférieure (2) présentant des zones de contacts métalliques (3) apte à assurer la liaison électrique et optionnellement thermique avec le fond métallique inférieur d'une cellule (1)
- une platine supérieure (4) présentant des zones de contacts métalliques pour assurer la liaison électrique avec la capsule supérieure d'une cellule (1)
- des moyens de connexion avec lesdites capsules supérieures des cellules, déformables élastiquement, selon une direction axiale par rapport à l'orientation desdites cellules,
**caractérisé en ce que** ledit bloc comporte une feuille conductrice présentant des découpes définissant des contacts déformables élastiquement présentant une partie centrale plane pour assurer le contact avec la capsule supérieure d'une cellule correspondante, ladite partie centrale plane étant mobile par rapport au plan de ladite platine intermédiaire (5) selon un déplacement parallèle audit plan, ladite partie centrale plane étant repoussée en direction de la cellule (1) par un matériau déformable élastiquement selon une direction perpendiculaire audit plan, ledit matériau étant logé entre la surface inférieure de ladite platine supérieure (4) et ladite partie centrale plane du contact, ladite partie centrale plane étant reliée à une partie fixe de ladite feuille conductrice par un bras de liaison au moins.

2. - Bloc énergétique selon la revendication 1 **caractérisé en ce que** ledit bloc comporte en outre une platine intercalaire (5) accolée contre la surface inférieure de ladite platine supérieure (4), ladite platine intercalaire (5) comportant une feuille conductrice présentant des découpes définissant des contacts déformables élastiquement présentant une partie centrale plane pour assurer le contact avec la capsule supérieure d'une cellule correspondante, ladite partie centrale plane étant mobile par rapport au plan de ladite platine intermédiaire (5) selon un déplacement parallèle audit plan, ladite partie centrale plane étant repoussée en direction de la cellule (1) par un matériau déformable élastiquement selon une direction perpendiculaire audit plan, ledit matériau étant logé entre la surface inférieure de ladite platine supérieure (4) et ladite partie centrale plane du contact, ladite partie centrale plane étant reliée à une partie fixe de ladite feuille conductrice par un bras de liaison au moins.

3. - Bloc énergétique selon la revendication 1 ou 2 **caractérisé en ce que** ledit bras (15) présente une forme spirale.

4. - Bloc énergétique selon la revendication 1 ou 2 **caractérisé en ce que** la partie centrale (7) plane dudit contact est reliée à la partie fixe par une pluralité de bras tangentiels.

5. - Bloc énergétique selon la revendication 2 **caractérisé en ce que** ladite platine intermédiaire (5) est constituée par un circuit imprimé comportant une pluralité de couches métalliques séparées par un isolant.

6. - Bloc énergétique selon la revendication 1, 2 ou 5 **caractérisé en ce que** lesdites parties centrales (7) présentent une pluralité de trous métallisés (51 à 53) reliant électriquement lesdites couches métalliques au niveau de chaque contact.

7. - Bloc énergétique selon la revendication 1, 2 ou 5 **caractérisé en ce que** chaque contact présente une zone fusible.

8. - Bloc énergétique selon la revendication 5 **caractérisé en ce que** ladite zone fusible est prévue entre les couches métalliques de ladite partie centrale (7) et les couches métalliques de la zone de liaison avec les couches métalliques de la feuille.

9. - Bloc énergétique selon la revendication 5 **caractérisé en ce qu'**une partie des pistes d'au moins un desdits circuits imprimés présente une zone fusible.

10. - Bloc énergétique selon la revendication 1, 2 ou 5 **caractérisé en ce que** ladite platine inférieure (2) est constituée par un circuit imprimé, une tôle métallique ou une feuille conductrice.

11. - Bloc énergétique selon la revendication 1, 2 ou 5 **caractérisé en ce que** ladite platine inférieure (2) est constituée par un circuit imprimé comportant au moins deux couches métalliques séparées par un isolant.

12. - Bloc énergétique selon la revendication précédente **caractérisé en ce que** les zones de contact de la platine inférieure (2) présentent une pluralité de trous métallisés reliant électriquement lesdites couches métalliques.

13. - Bloc énergétique selon la revendication précédente **caractérisé en ce que** ladite platine inférieure (1) et ladite platine supérieure (4) sont réunies mécaniquement et électriquement par des entretoises métalliques (14).

14. - Bloc énergétique selon la revendication précédente **caractérisé en ce que** ladite platine inférieure (1) et/ou ladite platine supérieure (4) est constituée par un circuit imprimé multicouche intégrant un circuit de management intelligent de la batterie ou un autre circuit électronique.

## Patentansprüche

1. Energieblock, der aus einer lötfreien Anordnung einer Vielzahl von Batteriezellen (1) besteht, die an ihren zwei gegenüberliegenden vorderen Enden jeweils eine positive und eine negative Kontaktoberfläche aufweisen, wobei die Zellen (1) nebeneinanderliegend und mechanisch parallel zueinander sind, wobei der Block umfasst:
- eine untere Platine (2), die metallische Kontaktzonen (3) aufweist, die geeignet ist, um die elektrische und optional thermische Verbindung mit dem unteren metallischen Boden einer Zelle (1) zu gewährleisten
- eine obere Platine (4), die metallische Kontaktzonen zum Gewährleisten der elektrischen Verbindung mit der oberen Kapsel einer Zelle (1) aufweist
- Mittel zum Anschließen an die oberen Kapseln der Zellen, die gemäß einer axialen Richtung relativ zu der Ausrichtung der Zellen elastisch verformbar sind,
**dadurch gekennzeichnet, dass** der Block eine leitende Folie umfasst, die Ausschnitte aufweist, die elastisch verformbare Kontakte definieren, die einen ebenen Mittelteil zum Gewährleisten des Kontakts mit der oberen Kapsel einer entsprechenden Zelle aufweisen, wobei der ebene Mittelteil relativ zu der Ebene der Zwischenplatine (5) gemäß einer Verschiebung parallel zu der Ebene bewegbar ist, wobei der ebene Mittelteil in Richtung der Zelle (1) durch ein elastisch verformbares Material gemäß einer Richtung senkrecht zu der Ebene zurückgedrückt wird, wobei das Material zwischen der unteren Oberfläche der oberen Platine (4) und dem ebenen Mittelteil des Kontakts angeordnet ist, wobei der ebene Mittelteil mit einem festen Teil der leitenden Folie durch einen Verbindungsarm mindestens verbunden ist.

2. Energieblock nach Anspruch 1, **dadurch gekennzeichnet, dass** der Block ferner eine eingeschobene Platine (5) umfasst, die an die untere Oberfläche der oberen Platine (4) angefügt ist, wobei die eingeschobene Platine (5) eine leitende Folie umfasst, die Ausschnitte aufweist, die elastisch verformbare Kontakte definieren, die einen ebenen Mittelteil zum Gewährleisten des Kontakts mit der oberen Kapsel einer entsprechenden Zelle aufweisen, wobei der ebene Mittelteil relativ zu der Ebene der Zwischenplatine (5) gemäß einer Verschiebung parallel zu der Ebene bewegbar ist, wobei der ebene Mittelteil in Richtung der Zelle (1) durch ein elastisch verformbares Material gemäß einer Richtung senkrecht zu der Ebene zurückgedrückt wird, wobei das Material zwischen der unteren Oberfläche der oberen Platine (4) und dem ebenen Mittelteil des Kontakts angeordnet ist, wobei der ebene Mittelteil mit einem festen Teil der leitenden Folie durch einen Verbindungsarm mindestens verbunden ist.

3. Energieblock nach Anspruch 1 oder 2, **dadurch gekennzeichnet, dass** der Arm (15) eine Spiralform aufweist.

4. Energieblock nach Anspruch 1 oder 2, **dadurch gekennzeichnet, dass** der ebene Mittelteil (7) des Kontakts mit dem festen Teil durch eine Vielzahl von Tangentialarmen verbunden ist.

5. Energieblock nach Anspruch 2, **dadurch gekennzeichnet, dass** die Zwischenplatine (5) aus einer gedruckten Schaltung besteht, die eine Vielzahl von metallischen Schichten umfasst, die durch einen Isolator getrennt sind.

6. Energieblock nach Anspruch 1, 2, oder 5, **dadurch gekennzeichnet, dass** die Mittelteile (7) eine Vielzahl von metallisierten Löchern (51 bis 53) aufweisen, die die metallischen Schichten an jedem Kontakt elektrisch verbinden.

7. Energieblock nach Anspruch 1, 2 oder 5, **dadurch gekennzeichnet, dass** jeder Kontakt eine schmelzbare Zone aufweist.

8. Energieblock nach Anspruch 5, **dadurch gekennzeichnet, dass** die schmelzbare Zone zwischen den metallischen Schichten des Mittelteils (7) und den metallischen Schichten der Verbindungszone mit den metallischen Schichten der Folie vorgesehen ist.

9. Energieblock nach Anspruch 5, **dadurch gekennzeichnet, dass** ein Teil von Bahnen mindestens einer der gedruckten Schaltungen eine schmelzbare Zone aufweist.

10. Energieblock nach Anspruch 1, 2 oder 5, **dadurch gekennzeichnet, dass** die untere Platine (2) aus einer gedruckten Schaltung, einem metallischen Blech oder einer leitenden Folie besteht.

11. Energieblock nach Anspruch 1, 2 oder 5, **dadurch gekennzeichnet, dass** die untere Platine (2) aus einer gedruckten Schaltung besteht, die mindestens zwei metallische Schichten umfasst, die durch einen Isolator getrennt sind.

12. Energieblock nach dem vorstehenden Anspruch,
**dadurch gekennzeichnet, dass** die Kontaktzonen der unteren Platine (2) eine Vielzahl von metallisierten Löchern aufweisen, die die metallischen Schichten elektrisch verbinden.

13. Energieblock nach dem vorstehenden Anspruch,
**dadurch gekennzeichnet, dass** die untere Platine (1) und die obere Platine (4) durch metallische Abstandshalter (14) mechanisch und elektrisch zusammengefügt sind.

14. Energieblock nach dem vorstehenden Anspruch,
**dadurch gekennzeichnet, dass** die untere Platine (1) und/oder die obere Platine (4) aus einer mehrschichtigen gedruckten Schaltung besteht, die eine intelligente Verwaltungsschaltung der Batterie oder eine andere elektronische Schaltung integriert.

## Claims

1. A power unit, consisting of a weld-free assembly of a plurality of battery cells (1) having positive and negative contact surfaces, respectively, on two opposing end faces thereof, said cells (1) being mechanically juxtaposed and parallel with one another, said unit comprising:
- a bottom plate (2) having metal contact zones (3) capable of ensuring electrical and optionally thermal connection with the bottom metal base of a cell (1)
- a top plate (4) having metal contact zones for ensuring electrical connection with a top cap of a cell (1)
- means for connecting with said cell top cap, which means are resiliently deformable in an axial direction relative to the orientation of said cells,
**characterized in that** said unit comprises a conductive sheet having cut-outs defining resiliently deformable contacts having a planar central portion to ensure contact with the top cap of a corresponding cell, said planar central portion being movable relative to a plane of said intermediate plate (5) in a displacement parallel to said plane, said planar central portion being urged toward the cell (1) by a material which is resiliently deformable in a direction perpendicular to said plane, said material being housed between the bottom surface of said top plate (4) and said planar central portion of the contact, said planar central portion being connected to a fixed portion of said conductive sheet by at least one connection arm.

2. The power unit according to claim 1, **characterized in that** said unit further comprises a spacer plate (5) adjoining the bottom surface of said top plate (4), said spacer plate (5) comprising a conductive sheet having cut-outs defining resiliently deformable contacts having a planar central portion to ensure contact with the top cap of a corresponding cell, said planar central portion being movable relative to the plane of said spacer plate (5) in a displacement parallel to said plane, said planar central portion being urged toward the cell (1) by a resiliently deformable material in a direction perpendicular to said plane, said material being housed between the bottom surface of said top plate (4) and said planar central portion of the contact, said planar central portion being connected to a fixed part of said conductive sheet by at least one connection arm.

3. The power unit according to claim 1 or 2, **characterized in that** said arm (15) has a spiral shape.

4. The power unit according to claim 1 or 2, **characterized in that** the planar central portion (7) of said contact is connected to the fixed part by a plurality of tangential arms.

5. The power unit according to claim 2, **characterized in that** said spacer plate (5) consists of a printed circuit comprising a plurality of metal layers separated by an insulator.

6. The power unit according to claim 1, 2 or 5, **characterized in that** said central portions (7) have a plurality of metalized holes (51 to 53) electrically connecting said metal layers at each contact.

7. The power unit according to claim 1, 2 or 5, **characterized in that** each contact has a fusible zone.

8. The power unit according to claim 5, **characterized in that** said fusible zone is provided between the metal layers of said central portion (7) and the metal layers of the connection zone with the metal layers of the sheet.

9. The power unit according to claim 5, **characterized in that** a portion of the tracks of at least one of said printed circuits has a fusible zone.

10. The power unit according to claim 1, 2 or 5, **characterized in that** said bottom plate (2) consists of a printed circuit, a metal sheet or a conductive sheet.

11. The power unit according to claim 1, 2 or 5, **characterized in that** said bottom plate (2) consists of a printed circuit comprising at least two metal layers separated by an insulator.

12. The power unit according to the preceding claim, **characterized in that** the contact zones of the bottom plate (2) have a plurality of metalized holes electrically connecting said metal layers.

13. The power unit according to the preceding claim, **characterized in that** said bottom plate (1) and said top plate (4) are mechanically and electrically connected by metal spacers (14).

14. The power unit according to the preceding claim, **characterized in that** said bottom plate (1) and/or said top plate (4) consists of a multilayer printed circuit integrating an intelligent battery management circuit or another electronic circuit.
